# EUROPEAN PATENT SPECIFICATION

(11) **EP 3 627 359 B1**
(45) Date of publication and mention of the grant of the patent: **04.10.2023**
(21) Application number: 17912603.2
(22) Date of filing: 05.06.2017
(51) Int. Cl.: G06F 16/27

(54) **TRANSACTION PROCESSING METHOD, DEVICE AND EQUIPMENT**
TRANSAKTIONSVERARBEITUNGSVERFAHREN, -VORRICHTUNG UND -AUSRÜSTUNG
PROCÉDÉ, DISPOSITIF ET ÉQUIPEMENT DE TRAITEMENT DE TRANSACTION

(43) Date of publication of application: 25.03.2020
(73) Proprietor: Huawei Technologies Co., Ltd., Longgang District Shenzhen, Guangdong 518129 (CN)
(72) Inventor: LIU, Zhe, Shenzhen Guangdong 518129 (CN); ZHU, Junhua, Shenzhen Guangdong 518129 (CN); LIN, Xiaoyong, Shenzhen Guangdong 518129 (CN)
(74) Representative: Gill Jennings & Every LLP
(86) International application number: PCT/CN2017/087194
(87) International publication number: WO 2018/223262

(56) References cited:
- WO-A1-2015/039569
- CN-A- 103 116 596
- CN-A- 106 598 992
- CN-A- 106 610 876
- US-A1- 2016 234 173
- US-B1- 9 632 878
- LIU FAGUI ET AL: "A framework for lightweight data synchronization on mobile RFID devices", COMPUTING, COMMUNICATION, CONTROL, AND MANAGEMENT, 2009. CCCM 2009. ISECS INTERNATIONAL COLLOQUIUM ON, IEEE, PISCATAWAY, NJ, USA, 8 August 2009 (2009-08-08), pages 468-473, XP031532406, ISBN: 978-1-4244-4247-8

## Description

### BACKGROUND

A conventional solution based on a local transaction of a database can ensure consistency only in one-time processing on a single service, and cannot ensure processing consistency between a plurality of distributed services. Therefore, a coordination mechanism between processing on distributed services needs to be established, to implement multi-version concurrency control (MVCC).

In a related technology, a server distinguishes a single-partition transaction (a transaction operation is related to only one data partition) from a multi-partition transaction (a transaction operation is related to a plurality of data partitions), and sets a transaction queue for each data partition. When receiving transactions, the server adds a single-partition transaction to a transaction queue of a corresponding data partition, and adds a multi-partition transaction to transaction queues of a plurality of corresponding data partitions. When processing transactions, the server processes transactions in transaction queues one by one. To ensure consistency between data partitions, the server performs cooperative processing for same multi-partition write transactions in a plurality of data partitions.

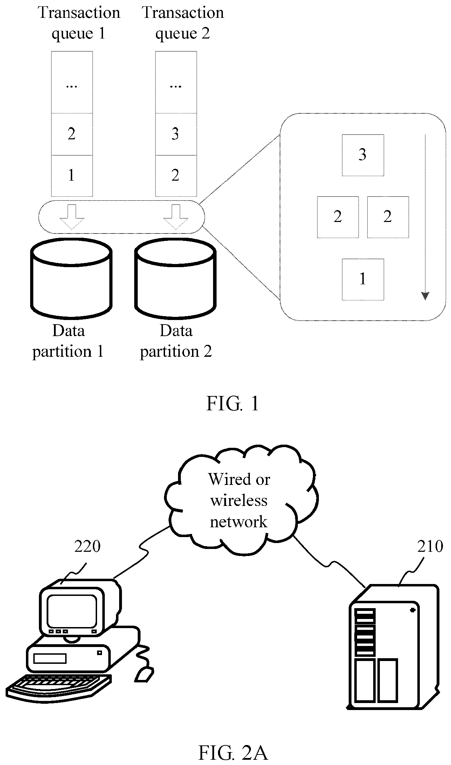

For example, referring to FIG 1, FIG 1 shows a schematic diagram of transaction processing in the related technology. In FIG 1, a data partition 1 corresponds to a transaction queue 1, and a data partition 2 corresponds to a transaction queue 2. The transaction queue 1 includes two transactions: a single-partition transaction 1 and a multi-partition transaction 2, and the transaction queue 2 includes two transactions: the multi-partition transaction 2 and a single-partition transaction 3. In a transaction processing process, the server first extracts the single-partition transaction 1 in the queue 1 and the multi-partition transaction 2 in the queue 2 based on the transaction queues. In this case, the server performs the single-partition transaction 1 for the data partition 1, and performs the multi-partition transaction 2 for the data partition 2. After completing processing on the single-partition transaction 1, the server extracts the multi-partition transaction 2 in the transaction queue 1. In this case, because processing on the multi-partition transaction 2 for the data partition 1 has not been completed, even if the multi-partition transaction 2 for the data partition 2 has been completed, the server does not immediately perform the single-partition transaction 3 in the queue 2, but performs the single-partition transaction 3 after the multi-partition transaction 2 for the data partition 2 is completed.

A multi-partition transaction is usually a long transaction, and is usually processed for a relatively long time. A single-partition transaction is usually a short transaction, and is processed for a relatively short time. In the related technology, when same multi-partition transactions in different transaction queues have different processing progresses, processing on a multi-partition transaction blocks a single-partition transaction, resulting in a low system throughput and service level, and affecting user experience.

US 9,632,878 B1 relates to a system that implements a data storage service may store data for database tables in multiple replicated partitions on respective storage nodes.

US 2016/0234173 A1 relates to systems and methods for providing a trusted database system that leverages a small amount of trusted storage to secure a larger amount of untrusted storage.

### SUMMARY

The invention is defined by the subject matter of independent claims. Further aspects of the invention are outlined in the dependent claims.

To improve a system throughput and a service level, embodiments of this application provide a transaction processing method, apparatus, and device.

According to a first aspect, a transaction processing method is provided, where the method includes:
receiving a to-be-processed transaction, where the to-be-processed transaction is a transaction of performing an operation in at least two data partitions; obtaining data snapshots that correspond to the at least two data partitions and that meet consistency; and performing, based on the data snapshots that correspond to the at least two data partitions and that meet consistency, the operation corresponding to the to-be-processed transaction.

In the solution described in the first aspect, for a multi-partition transaction related to at least two data partitions, data snapshots meeting consistency are obtained for the data partitions related to the multi-partition transaction, and an operation corresponding to the multi-partition transaction is performed based on the data snapshots. Parallel execution of a read transaction and a write transaction is supported, to avoid blocking between the write transaction and the read transaction, thereby improving a system throughput and a service level.

In a possible design, the to-be-processed transaction is a transaction of performing a read operation in the at least two data partitions.

In a possible design, the obtaining data snapshots that correspond to the at least two data partitions and that meet consistency includes: obtaining respective data snapshots of the at least two data partitions, and version information of the respective data snapshots of the at least two data partitions; detecting, based on the version information of the respective data snapshots of the at least two data partitions, whether the respective data snapshots of the at least two data partitions meet consistency; and if a detection result is that the respective data snapshots of the at least two data partitions meet consistency, determining that the data snapshots that respectively correspond to the at least two data partitions and that meet consistency are successfully obtained.

In the foregoing possible design solution, when data snapshots corresponding to a multi-partition transaction are obtained, version information of the data snapshots is also obtained, and whether data snapshots respectively corresponding to a plurality of data partitions meet consistency is checked based on the obtained version information of the data snapshots, to avoid obtaining snapshots that do not meet consistency.

In a possible design, the obtaining data snapshots that correspond to the at least two data partitions and that meet consistency further includes: if the detection result is that the respective data snapshots of the at least two data partitions do not meet consistency, re-obtaining a data snapshot of a data partition having an earlier version, and version information of the re-obtained data snapshot; and detecting, based on the version information of the re-obtained data snapshot, whether the respective data snapshots of the at least two data partitions meet consistency.

In the foregoing possible design solution, when the obtained data snapshots do not meet consistency, for a data partition having an earlier data snapshot version, a data snapshot corresponding to the data partition and version information are re-obtained, and whether the data snapshots meet consistency is further determined.

In a possible design, the method further includes: if a detection result is that the respective data snapshots of the at least two data partitions are inconsistent, deleting the obtained data snapshot of the data partition having an earlier version.

In the foregoing possible design solution, the version information of the data snapshot includes an identifier of a multi-partition write transaction of performing latest writing into a data partition corresponding to the data snapshot when the data snapshot is generated, and the multi-partition write transaction is a transaction of performing a write operation in the at least two data partitions.

In the foregoing possible design solution, an identifier of a multi-partition write transaction of performing latest writing is used as version information of a data partition, to avoid that data written inconsistently is read during a multi-partition read operation, and ensure data reading accuracy.

In a possible design, the to-be-processed transaction is a transaction of performing a write operation in the at least two data partitions, and the performing, based on the data snapshots that correspond to the at least two data partitions and that meet consistency, the operation corresponding to the to-be-processed transaction includes:
performing the write operation corresponding to the to-be-processed transaction in the data snapshots that correspond to the at least two data partitions and that meet consistency; and storing, as data in corresponding data partitions, data snapshots obtained after the write operation corresponding to the to-be-processed transaction is performed.

In a possible design, the to-be-processed transaction is a transaction of performing a write operation in the at least two data partitions, and the method further includes:
after the write operation corresponding to the to-be-processed transaction is successfully performed based on the data snapshots that respectively correspond to the at least two data partitions and that meet consistency, updating version information respectively corresponding to the at least two data partitions with an identifier of the to-be-processed transaction.

According to a second aspect, a transaction processing apparatus is provided, where the apparatus has a function of implementing the transaction processing method according to the first aspect and the possible design solutions of the first aspect. The function may be implemented by using hardware, or may be implemented by hardware by running corresponding software. The hardware or the software includes one or more units corresponding to the function.

According to a third aspect, a transaction processing device is provided, where the device includes: a processor, a memory, and a communications interface, the communications interface is configured to be controlled by the processor; and the processor in the device controls the communications interface to implement the transaction processing method according to the first aspect and the possible design solutions of the first aspect by executing a program or an instruction stored in the memory.

According to a fourth aspect, a computer readable storage medium is provided, where the computer readable storage medium stores an executable program, and the executable program is executed by a processor to implement the transaction processing method according to the first aspect and the possible design solutions of the first aspect.

According to a fifth aspect, a transaction processing system is provided, where the system includes a transaction processing apparatus and at least two data partitions, where the transaction processing apparatus is configured to implement the transaction processing method according to the first aspect and the possible design solutions of the first aspect.

### BRIEF DESCRIPTION OF DRAWINGS

FIG 1 is a schematic diagram of transaction processing in a related technology;
FIG 2A is an architectural diagram of a transaction processing system in embodiments of this application;
FIG 2B is a schematic flowchart of processing on a multi-partition transaction in embodiments of this application;
FIG 3 is a method flowchart of a transaction processing method according to an example embodiment of this application;
FIG 4 is a schematic diagram of a correspondence between a second write transaction queue and a data partition in the embodiment shown in FIG 3;
FIG 5 is a schematic diagram of a correspondence between a second read transaction queue and a data partition in the embodiment shown in FIG 3;
FIG 6 is a schematic diagram of a correspondence between a first transaction queue and a special partition in the embodiment shown in FIG 3;
FIG 7 is a schematic composition diagram of a participant node according to an example embodiment of this application;
FIG 8 is a schematic implementation diagram of a transaction processing device according to an example embodiment of this application;
FIG 9 is a schematic implementation diagram of a transaction processing device according to an example embodiment of this application;
FIG 10 is a schematic structural diagram of a transaction processing device according to an example embodiment of this application;
FIG 11 is a structural block diagram of a transaction processing apparatus according to an example embodiment of this application; and
FIG 12 is a system composition diagram of a transaction processing system according to an example embodiment of this application.

### DESCRIPTION OF EMBODIMENTS

To make the objectives, technical solutions, and advantages of this application clearer, the following further describes the implementations of this application in detail with reference to the accompanying drawings.

FIG 2A is an architectural diagram of a transaction processing system in this application. The system includes the following devices: a transaction processing device 210 and at least one terminal device 220.

The transaction processing device 210 may be a general-purpose computer or a workstation, or the transaction processing device 210 may be a single server, a server cluster, a cloud computing center, or the like.

In an embodiment of this application, data corresponding to the transaction processing device 210 may be divided into one or more data partitions. The partition is a continuous value range. In this embodiment of this application, the data partition may be a continuous interval obtained after hash calculation is performed on a data field (a primary key field or a non-primary key field) based on a particular hash algorithm.

The transaction processing device 210 is connected to the at least one terminal device 220 through a wired or wireless network.

The transaction processing device 210 is configured to process a transaction sent by the at least one terminal device 220. The transaction sent by the at least one terminal device 220 may be a single-partition transaction or a multi-partition transaction. From another perspective, the transaction sent by the at least one terminal device 220 may be a read transaction or a write transaction.

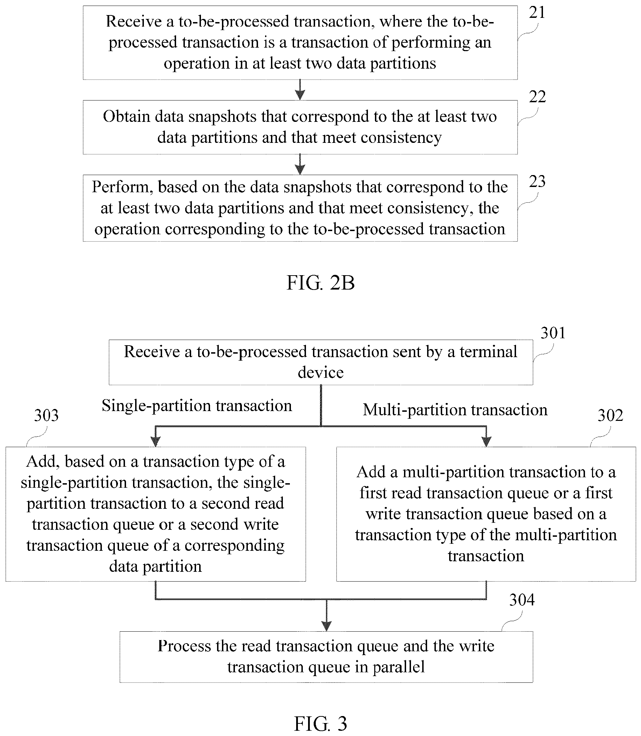

During actual application, for a same data partition, a write transaction changes data stored in the data partition, but a read transaction does not change the data stored in the data partition. Therefore, the write transaction and the read transaction actually can be performed in parallel. Therefore, referring to FIG 2B, FIG 2B is a schematic flowchart of processing on a multi-partition transaction in embodiments of this application. As shown in FIG 2B, when the transaction processing device 210 processes a transaction, steps of processing on a multi-partition transaction are as follows:
Step 21: Receive a to-be-processed transaction, where the to-be-processed transaction is a transaction of performing an operation in at least two data partitions.
Step 22: Obtain data snapshots that correspond to the at least two data partitions and that meet consistency.
Step 23: Perform, based on the data snapshots that correspond to the at least two data partitions and that meet consistency, the operation corresponding to the to-be-processed transaction.

To be specific, in this embodiment of this application, when performing a read operation or a write operation, the transaction processing device does not directly perform the operation in the data partitions, but performs the operation in the data snapshots corresponding to the data partitions. For one data partition, a data snapshot can be provided at the same time for one write transaction and at least one read transaction, that is, processing on one write transaction and processing on at least one read transaction can be simultaneously supported. To be specific, the write transaction and the read transaction on the data partition do not block each other, thereby improving a system throughput and a service level.

FIG 3 is a method flowchart of a transaction processing method according to an example embodiment of this application. The method may be applied to the transaction processing device 210 in the system shown in FIG 2A. As shown in FIG 3, the transaction processing method may include the following steps.

Step 301: Receive a to-be-processed transaction sent by a terminal device, and perform step 302 if the to-be-processed transaction is a multi-partition transaction, or perform step 303 if the to-be-processed transaction is a single-partition transaction.

The single-partition transaction is a transaction of performing an operation in a single data partition, and the multi-partition transaction is a transaction of performing an operation in at least two data partitions.

More specifically, a single-partition read transaction is a transaction of performing a read operation in a related single data partition, and a single-partition write transaction is a transaction of performing a write operation in a related single data partition. Correspondingly, a multi-partition read transaction is a transaction of performing a read operation in at least two related data partitions, and a multi-partition write transaction is a transaction of performing a write operation in at least two related data partitions.

In this embodiment of this application, the terminal device may send a transaction processing request to the transaction processing device, and the transaction processing request includes the to-be-processed transaction.

The transaction processing request may include partition indication information, and the partition indication information may indicate whether the to-be-processed transaction is a single-partition transaction or a multi-partition transaction.

Optionally, the transaction processing request may not include the partition indication information, and the partition indication information may be obtained by the transaction processing device by parsing key information in the transaction processing request.

Step 302: Add the multi-partition transaction to a first read transaction queue or a first write transaction queue based on a transaction type of the multi-partition transaction.

The transaction processing request may further include the transaction type of the transaction, or the transaction processing device may perform analysis based on the to-be-processed transaction to determine the corresponding transaction type.

Transaction queues in this embodiment of this application may be classified into two levels of queues. When receiving the multi-partition transaction, the transaction processing device first adds the multi-partition transaction to a first-level queue, and then adds the multi-partition transaction in the first-level queue to a second-level queue in a subsequent parallel processing process. The first-level queue is the first read transaction queue and the first write transaction queue. The second-level queue is a second read transaction queue and a second write transaction queue that correspond to each data partition.

The first-level queue includes the first read transaction queue and/or the first write transaction queue. When the transaction processing device receives a multi-partition transaction, if a transaction type of the multi-partition transaction is a read transaction, the multi-partition transaction is added to the first read transaction queue. Otherwise, if a transaction type of the multi-partition transaction is a write transaction, the multi-partition transaction is added to the first write transaction queue.

Step 303: Add, based on a transaction type of the single-partition transaction, the single-partition transaction to a second read transaction queue or a second write transaction queue of a corresponding data partition.

In this embodiment of this application, each data partition corresponds to only one second write transaction queue, but each second write transaction queue may correspond to one or more data partitions. When the transaction processing device receives the single-partition transaction, if the single-partition transaction is a write transaction, the single-partition transaction is added to a second write transaction queue corresponding to the single-partition transaction.

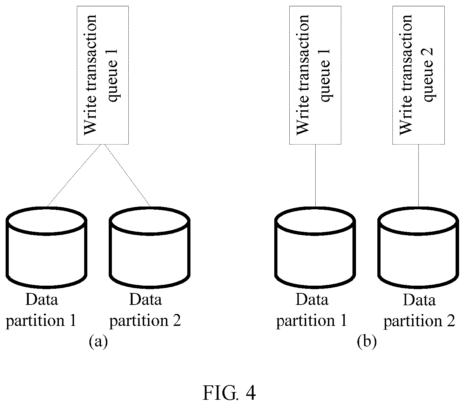

For example, referring to FIG 4, FIG 4 shows a schematic diagram of a correspondence between a second write transaction queue and a data partition in an embodiment of this application. As shown in FIG 4(a), a data partition 1 and a data partition 2 may correspond to a same second write transaction queue (a write transaction queue 1). To be specific, both a single-partition write transaction on the data partition 1 and a single-partition write transaction on the data partition 2 are added to the write transaction queue 1. Alternatively, as shown in FIG 4(b), two data partitions may each correspond to one second write transaction queue (to be specific, a data partition 1 corresponds to a write transaction queue 1, and a data partition 2 corresponds to a write transaction queue 2). To be specific, a single-partition write transaction on the data partition 1 is added to the write transaction queue 1, and a single-partition write transaction on the data partition 2 is added to the write transaction queue 2.

A correspondence between a data partition and a second read transaction queue is not limited, and may be a one-to-one, one-to-multiple, or multiple-to-multiple relationship. When the transaction processing device receives a single-partition transaction, if the single-partition transaction is a read transaction, the single-partition transaction is added to a second read transaction queue corresponding to the single-partition transaction. When the single-partition transaction corresponds to a plurality of second read transaction queues, the single-partition transaction is added to only one of the plurality of corresponding second read transaction queues.

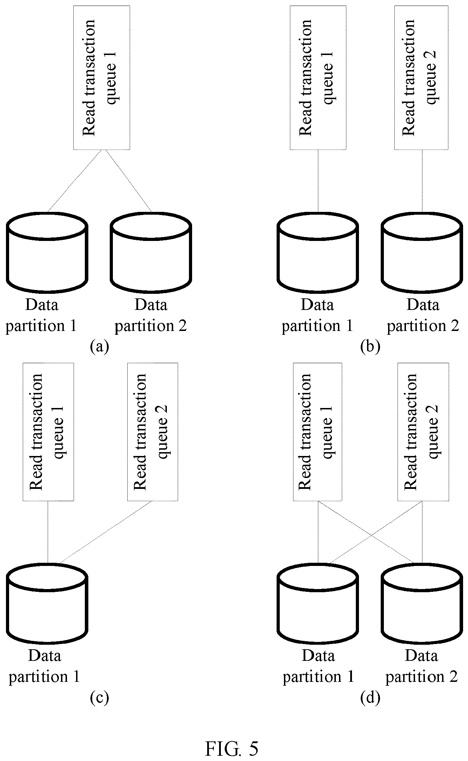

For example, referring to FIG 5, FIG 5 shows a schematic diagram of a correspondence between a second read transaction queue and a data partition in an embodiment of this application. As shown in FIG 5(a), a data partition 1 and a data partition 2 may correspond to a same second read transaction queue (a read transaction queue 1). To be specific, both a single-partition read transaction on the data partition 1 and a single-partition read transaction on the data partition 2 are added to the read transaction queue 1. Alternatively, as shown in FIG 5(b), two data partitions may each correspond to one second read transaction queue (to be specific, a data partition 1 corresponds to a read transaction queue 1, and a data partition 2 corresponds to a read transaction queue 2). To be specific, a single-partition read transaction on the data partition 1 is added to the read transaction queue 1, and a single-partition read transaction on the data partition 2 is added to the read transaction queue 2. Alternatively, as shown in FIG 5(c), a data partition 1 may correspond to both a read transaction queue 1 and a read transaction queue 2. To be specific, a single-partition read transaction on the data partition 1 may be added to the read transaction queue 1 or the read transaction queue 2. Alternatively, as shown in FIG 5(d), a data partition 1 may correspond to both a read transaction queue 1 and a read transaction queue 2, and a data partition 2 may also correspond to both the read transaction queue 1 and the read transaction queue 2. To be specific, a single-partition read transaction on the data partition 1 may be added to the read transaction queue 1 or the read transaction queue 2, and a single-partition read transaction on the data partition 2 may also be added to the read transaction queue 1 or the read transaction queue 2.

Optionally, although there is no correspondence between a data partition and a first transaction queue, the first transaction queue may be allocated a special partition having a special flag. The special partition is not used to store data, and the special flag of the special partition is used to distinguish from a data partition or a special partition.

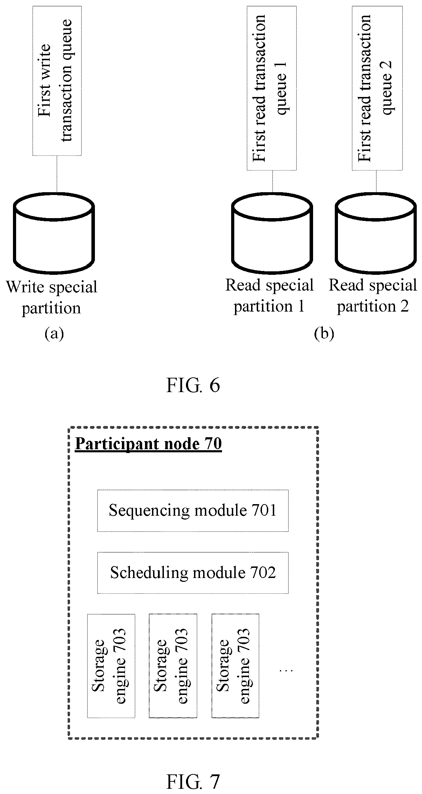

Referring to FIG 6, FIG 6 shows a schematic diagram of a correspondence between a first transaction queue and a special partition in an embodiment of this application. As shown in FIG 6(a), a special partition is divided into a write special partition and a read special partition, and there are one write special partition and one first write transaction queue, which are in a one-to-one correspondence. All multi-partition write transactions are added to the first write transaction queue corresponding to the write special partition. As shown in FIG 6(b), there are one or more first read transaction queues (two are shown in the figure), and each first read transaction queue corresponds to one read special partition (as shown in the figure, a first read transaction queue 1 corresponds to a read special partition 1, and a first read transaction queue 2 corresponds to a read special partition 2). For a multi-partition read transaction, the multi-partition transaction may be added to the first read transaction queue 1, or may be added to the first read transaction queue 2.

It should be noted that, the first write transaction queue corresponding to the write special partition may be added as a special write queue to a second write transaction queue.

Similarly, the first read transaction queue corresponding to the read special partition may be added as a special read queue to a second read transaction queue.

Step 304: Process the read transaction queue and the write transaction queue in parallel.

In this embodiment of this application, when the transaction processing device processes read transaction queues and write transaction queues in step 302 and step 303 in parallel, the transaction processing device processes write transactions in a same write transaction queue in series. To be specific, for a plurality of write transactions in a write transaction queue, the transaction processing device processes a next write transaction in the write transaction queue only after completing processing on a previous write transaction. The transaction processing device processes read transactions in a same read transaction queue in parallel. For example, for a read transaction queue, the transaction processing device may simultaneously process a plurality of read transactions in the read transaction queue by using a plurality of threads.

In this embodiment of this application, the transaction processing device processes transactions by using data snapshots. In addition, this embodiment of this application is related to processing on a multi-partition read transaction and a multi-partition write transaction, and a data consistency principle needs to be considered in a process of processing the multi-partition transactions. Therefore, in this embodiment of this application, when transactions are processed by using data snapshots, it needs to be ensured that obtained data snapshots meet consistency. A specific processing process may be as follows.

### 1. Processing for a single-partition read transaction or a single-partition write transaction

When processing a single-partition read transaction or a single-partition write transaction, the transaction processing device obtains a data snapshot of a data partition corresponding to the single-partition read transaction or the single-partition write transaction, and after successfully obtaining the data snapshot, implement reading or writing of the transaction based on the data snapshot.

Specifically, when a single-partition write transaction is processed, for any second write transaction queue above, the transaction processing device obtains a single-partition write transaction that reaches a processing location in the second write transaction queue (for example, the processing location may be a queue head location of the queue), obtains a data snapshot of a data partition corresponding to the single-partition write transaction, writes written data corresponding to the single-partition write transaction to the obtained data snapshot, and stores, as data in the corresponding data partition, a data snapshot obtained after the data is written. The step of writing data to a data snapshot and storing the data snapshot as data in a data partition may be referred to as committing (commit) a write transaction.

Similarly, when a single-partition read transaction is processed, for any second read transaction queue above, the transaction processing device obtains a single-partition read transaction that reaches a processing location in the second read transaction queue, obtains a data snapshot of a data partition corresponding to the single-partition read transaction, reads data corresponding to the single-partition read transaction from the obtained data snapshot, sends the read data to a corresponding terminal device, and deletes the data snapshot.

A single-partition transaction is related only to a single data partition, and consistency does not need to be considered for a data snapshot of the single data partition. Therefore, in this embodiment of this application, when a to-be-processed transaction is related to only one data partition, it may be considered that an obtained data snapshot corresponding to the to-be-processed transaction definitely meets consistency.

### 2. Processing for a multi-partition read transaction

For any multi-partition transaction in a read transaction queue, the transaction processing device may determine data partitions corresponding to the multi-partition transaction, obtain data snapshots that respectively correspond to the data partitions and that meet consistency, and perform a read operation corresponding to the multi-partition transaction on the respective data snapshots of the data partitions.

In this embodiment of the present invention, that data snapshots respectively corresponding to data partitions meet consistency means that for any two of the data partitions, when data snapshots of the two data partitions are obtained, writing of a latest multi-partition write transaction related to both of the two data partitions has been completed in the two data partitions.

Specifically, for multi-partition transactions in the first read transaction queue, the transaction processing device may obtain a multi-partition transaction that reaches a processing location in the first read transaction queue, and add the obtained multi-partition transaction to a second read transaction queue corresponding to the multi-partition transaction. When the multi-partition transaction reaches a processing location in the second read transaction queue, the transaction processing device then obtains respective data snapshots of data partitions corresponding to the multi-partition transaction. Alternatively, after obtaining a multi-partition transaction that reaches a processing location in the first read transaction queue, the transaction processing device may directly obtain respective data snapshots of data partitions corresponding to the multi-partition transaction.

A multi-partition read transaction is to perform a read operation on data in a plurality of data partitions, a read transaction and a write transaction in this embodiment of this application are processed in parallel, and a multi-partition write transaction does not have a definitely same commit time for different data partitions. Therefore, the multi-partition write transaction may also appear sequential to the outside, and at a particular moment, data snapshots obtained for different data partitions corresponding to a same multi-partition read transaction do not meet consistency. In this case, data directly read based on the obtained data snapshots may be inconsistent. Therefore, in this embodiment of this application, when obtaining data snapshots that correspond to at least two data partitions related to the multi-partition read transaction and that meet consistency, the transaction processing device may obtain respective data snapshots of the at least two data partitions, and version information of the respective data snapshots of the at least two data partitions, detect, based on version information of data in the respective data snapshots of the data partitions, whether the respective data snapshots of the data partitions meet consistency, and if the respective data snapshots of the data partitions meet consistency, perform a step of separately performing a read operation corresponding to the multi-partition transaction on the respective data snapshots of the data partitions. Otherwise, if the respective data snapshots of the data partitions do not meet consistency, for a data partition that has an earlier version (that is, not a latest version) and that corresponds to data version information, the transaction processing device deletes an obtained data snapshot having an earlier data version, re-obtains a data snapshot of the data partition, and detects, based on version information of data in the re-obtained data snapshot, whether the data snapshots of the data partitions are consistent.

In this embodiment of this application, the version information of the data in the data snapshot includes an identifier of a multi-partition transaction (that is, a multi-partition write transaction) of performing latest writing into a data partition corresponding to the data snapshot when the data snapshot is generated.

After receiving a multi-partition transaction, the transaction processing device may allocate a corresponding identifier to the multi-partition transaction. Specifically, the identifier of the multi-partition transaction may be an ID or a unique number of the multi-partition transaction.

Further, different multi-partition transaction identifiers may be used to distinguish a sequence of processing different multi-partition transactions. For example, a multi-partition transaction identifier is an ID. When the transaction processing device allocates IDs to multi-partition transactions whose transaction types are a write transaction, the IDs allocated to the multi-partition transactions increase from 1. A multi-partition transaction having a smaller ID is processed earlier, and corresponds to an earlier data version. A multi-partition transaction having a larger ID is processed later, and corresponds to a later data version.

### 3. Processing for a multi-partition write transaction

For any to-be-processed transaction (that is, a multi-partition write transaction) in the write transaction queue, the transaction processing device may determine at least two data partitions corresponding to the multi-partition write transaction, obtain respective data snapshots of the at least two data partitions, separately perform a write operation corresponding to the multi-partition write transaction on the respective data snapshots of the at least two data partitions, and after separately completing the write operation on the respective data snapshots of the at least two data partitions, store the respective data snapshots of the at least two data partitions as respective data in the at least two data partitions.

In this embodiment of this application, the transaction processing device processes write transactions in a same write transaction queue in series. To be specific, for a plurality of write transactions in a write transaction queue, the transaction processing device processes a next write transaction in the write transaction queue only after completing processing on a previous write transaction. That is, when the transaction processing device processes a multi-partition write transaction, processing on a previous write transaction corresponding to each of at least two data partitions corresponding to the multi-partition write transaction has been completed. Therefore, in this case, obtained data snapshots that respectively correspond to the at least two data partitions definitely meet consistency. To be specific, when processing the multi-partition write transaction, the transaction processing device does not need to detect, by using version information corresponding to the data snapshots, whether the obtained data snapshots meet consistency.

Optionally, after the write operation corresponding to the multi-partition write transaction (that is, a to-be-processed transaction) is successfully performed based on the data snapshots that respectively correspond to the at least two data partitions and that meet consistency, the transaction processing device further updates version information respectively corresponding to the at least two data partitions with an identifier of the to-be-processed transaction.

Specifically, for multi-partition write transactions in the first write transaction queue, the transaction processing device may obtain a multi-partition write transaction that reaches a processing location in the first write transaction queue, and add the obtained multi-partition write transaction to second write transaction queues respectively corresponding to data partitions related to the multi-partition write transaction. When the multi-partition write transaction reaches all processing locations in the second write transaction queues respectively corresponding to the data partitions, the transaction processing device obtains respective data snapshots of the data partitions. Data partitions may simultaneously correspond to a to-be-processed single-partition write transaction and multi-partition write transaction. To avoid data inconsistency, when a write transaction is processed, all write transactions corresponding to a same data partition need to be processed in series regardless of whether the write transaction is a single-partition transaction or a multi-partition transaction. Therefore, in this embodiment of this application, for a multi-partition write transaction in the first write transaction queue, when processing the multi-partition write transaction, the transaction processing device adds the multi-partition write transaction to each of second write transaction queues respectively corresponding to related data partitions, to sequence the multi-partition write transaction together with respective single-partition write transactions of the data partitions in series. The transaction processing device obtains data snapshots corresponding to the data partitions and performs a write operation, only when each of the second write transaction queues respectively corresponding to the data partitions comes to execution of the multi-partition write transaction. Alternatively, when any second write transaction queue above comes to execution of the multi-partition write transaction, the transaction processing device may not wait for another second write transaction queue including the multi-partition write transaction to come to execution of the multi-partition write transaction, but directly obtain a data snapshot of a data partition corresponding to the second write transaction queue that comes to execution of the multi-partition write transaction, and perform a write operation in the obtained data snapshot; and after the write operation corresponding to the multi-partition write transaction is completed in data snapshots corresponding to all data partitions related to the multi-partition write transaction, store all written data snapshots corresponding to the multi-partition write transaction as data in the respectively corresponding data partitions.

Optionally, for multi-partition transactions in the first write transaction queue, the transaction processing device may obtain a multi-partition transaction that reaches a processing location in the first write transaction queue, and add the obtained multi-partition transaction to a second write transaction queue corresponding to a write special partition. When scheduling (that is, processing) comes to the transaction in the second write transaction queue corresponding to the write special partition, the transaction processing device obtains respective data snapshots of data partitions. When being performed, the transaction in the second write transaction queue corresponding to the write special partition blocks a single-partition write transaction on another data partition.

During actual application, second write transaction queues corresponding to two data partitions may be a same queue, and the transaction processing device adds the multi-partition write transaction only once to the second write transaction queue corresponding to the two data partitions.

In conclusion, according to the transaction processing method described in this embodiment of this application, for data partitions related to a multi-partition transaction, the transaction processing device obtains data snapshots meeting consistency, and performs, based on the data snapshots, a read operation or a write operation corresponding to the multi-partition transaction. Parallel execution of a read transaction and a write transaction is supported, to avoid blocking between a write transaction and a read transaction that correspond to a same data partition, thereby improving a system throughput and a service level.

In an embodiment of this application, steps in the embodiment corresponding to FIG 3 may be implemented by different functional components in a transaction processing device. These functional components may be logical functional components implemented by software or a combination of software and hardware. For example, each functional component above may be an independent function node (for example, an independent virtual machine or process), and function nodes interact with each other to implement transaction processing.

Specifically, for example, function nodes in the transaction processing device may be classified into two types, which may be referred to as a coordinator node and a participant node. There may be one coordinator node responsible for coordinating processing on a multi-partition transaction. Optionally, there may be a plurality of coordinator nodes, where one coordinator node is configured to process a multi-partition write and/or read transaction, and other coordinator nodes are configured to be responsible for processing a multi-partition read transaction. To be specific, there is only one coordinator node for multi-partition writing, and there may be a plurality of coordinator nodes for multi-partition reading. There may be a plurality of participant nodes, and each participant node corresponds to a respective data partition, and is responsible for independently processing a single-partition transaction related to the corresponding data partition, or processing, under coordination of the coordinator node, a multi-partition transaction related to the corresponding data partition. Optionally, in addition to the corresponding data partition, each participant node has a write special partition and a read special partition. The write special partition and the read special partition are used to process a multi-partition write transaction and a multi-partition read transaction that are delivered by the coordinator node.

The coordinator node is responsible for managing a first read transaction queue and a first write transaction queue in the embodiment shown in FIG 3, and each participant node is responsible for a second read transaction queue and a second write transaction queue that correspond to one or more respective data partitions.

Optionally, the second read transaction queue and the second write transaction queue that each participant node is responsible for further include a read queue and a write queue that correspond to the read special partition and the write special partition.

Steps performed by the participant node may be respectively implemented by three function modules. Specifically, referring to FIG 7, FIG 7 is a schematic composition diagram of a participant node according to an example embodiment of this application. In FIG 7, a participant node 70 includes a sequencing module 701, a scheduling module 702, and a storage engine 703.

The sequencing module 701 is configured to implement a step of adding a single-partition transaction to a corresponding second read transaction queue/second write transaction queue. Alternatively, the sequencing module 701 may be configured to implement a step of adding, to a corresponding second queue (including a second write transaction queue and/or a second read transaction queue) for sequencing, a multi-partition transaction that is distributed by a coordinator node from a first queue (including a first write transaction queue and/or a first read transaction queue).

The scheduling module 702 is configured to implement a step of performing scheduling processing on a transaction in the second read transaction queue/second write transaction queue.

The storage engine 703 is configured to implement functions of obtaining, storing, and deleting a data snapshot of a corresponding data partition, and maintaining version information of data in the obtained data snapshot.

Optionally, in each participant node 70, there is only one storage engine 703, and the participant node 70 performs read/write processing by using one or more corresponding data partitions as a whole. To be specific, when a transaction is processed, regardless of whether the transaction is related to all of data partitions corresponding to the participant node, the storage engine 703 obtains data snapshots of all the corresponding data partitions, and data in all the data partitions shares one piece of version information.

Alternatively, when there are two or more data partitions on the participant node 70, there may be a plurality of storage engines 703 in the participant node 70, and each storage engine 703 is responsible for storing a data snapshot and version information of one or more of the data partitions. When processing a transaction, the participant node 70 may obtain only data snapshots of some data partitions that are in data partitions on this node and that are related to the transaction.

In a possible implementation scenario, a plurality of data partitions correspond to a same second write transaction queue. To be specific, single-partition write transactions and multi-partition write transactions related to the plurality of data partitions are all added to the same second write transaction queue.

Optionally, the coordinator node is a function node independent of the participant nodes. The coordinator node is responsible for managing a first read transaction queue and a first write transaction queue, and coordinating processing by the participant nodes on multi-partition transactions in the first read transaction queue and the first write transaction queue.

Alternatively, the coordinator node is also a participant node. In addition to managing the first read transaction queue and the first write transaction queue, and coordinating processing by the participant nodes on the multi-partition transactions in the first read transaction queue and the first write transaction queue, the coordinator node is responsible for managing a corresponding second read transaction queue and second write transaction queue, and processing transactions in the corresponding second read transaction queue and second write transaction queue.

Alternatively, the coordinator node is also a participant node. The first write transaction queue of the coordinator node is a write transaction queue that is in a second write transaction queue and that corresponds to a write special partition, and the first read transaction queue of the coordinator node is a read transaction queue that is in a second read transaction queue and that corresponds to a read special partition. A multi-partition transaction may be first added to a first transaction queue, and when scheduling comes to the multi-partition transaction, the multi-partition transaction is then distributed to a second transaction queue corresponding to a data partition. Alternatively, optionally, a multi-partition transaction may be first added to a first transaction queue, and when scheduling comes to the multi-partition transaction, the multi-partition transaction is then distributed to a second transaction queue corresponding to a special partition. For this node, it is considered that the multi-partition transaction has reached an execution location, and a request does not need to be added to the second transaction queue of the special partition of this node.

Alternatively, the coordinator node is also a participant node. The first write transaction queue of the coordinator node is equivalent to a second write transaction queue of the node, and the first read transaction queue of the coordinator node is equivalent to a second read transaction queue of the node. A multi-partition write transaction is directly added to each first write transaction queue that is also a second write transaction queue, and when a same multi-partition write transaction is scheduled in all the first write transaction queues that are also second write transaction queues, requests are then distributed to the second write transaction queues. For this node, it is considered that the multi-partition write transaction has reached an execution location, and a request does not need to be added to all second write transaction queues of this node. Similarly, a multi-partition read transaction is directly added to a first read transaction queue that is also a second read transaction queue, and when scheduling comes to the transaction, a request is then distributed to the second read transaction queue. For this node, it is considered that the multi-partition read transaction has reached an execution location, and a request does not need to be added to the second read transaction queue of this node.

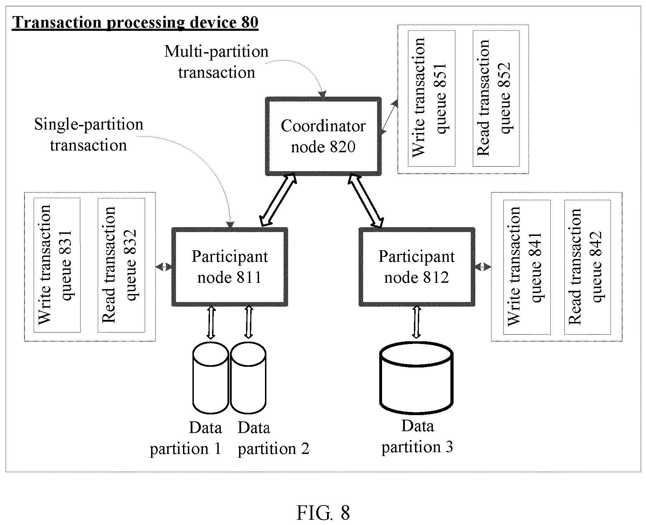

FIG 8 is a schematic implementation diagram of a transaction processing device according to an example embodiment of this application. In FIG 8, a transaction processing device 80 may include at least one participant node (a participant node 811 and a participant node 812 are shown in FIG 8) and a coordinator node 820. Each participant node has one or more data partitions (the participant node 811 having a data partition 1 and a data partition 2 and the participant node 812 having a data partition 3 are shown in FIG 8). The coordinator node may be one of participant nodes, or the coordinator node may be an independent node. For example, each participant node corresponds to one write transaction queue and one read transaction queue. In FIG 8, the coordinator node 820 manages a first write transaction queue 851 and a first read transaction queue 852, the participant node 811 manages a second write transaction queue 831 and a second read transaction queue 832, and the participant node 812 manages a second write transaction queue 841 and a second read transaction queue 842.

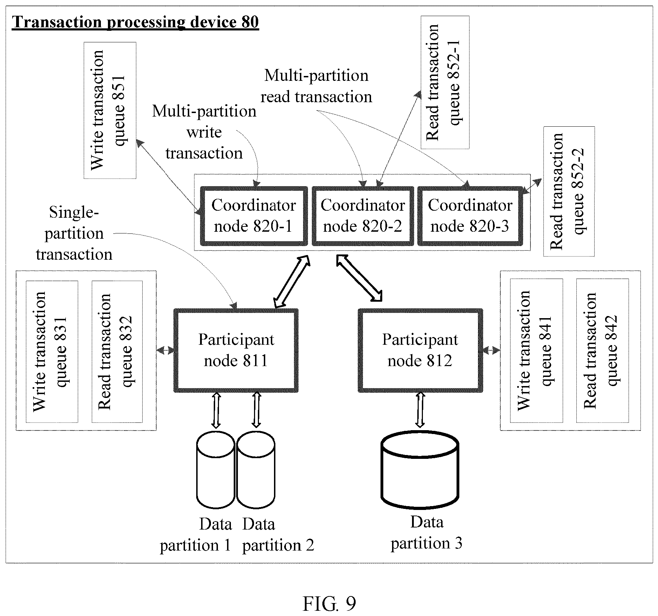

FIG 9 is a schematic implementation diagram of a transaction processing device according to an example embodiment of this application. In FIG 9, a transaction processing device 80 may include at least one participant node (a participant node 811 and a participant node 812 are shown in FIG 9) and at least two coordinator nodes 820 (three coordinator nodes 820 are shown in FIG 9: a coordinator node 820-1, a coordinator node 820-2, and a coordinator node 820-3). Each participant node has one or more data partitions (the participant node 811 having a data partition 1 and a data partition 2 and the participant node 812 having a data partition 3 are shown in FIG 9). The coordinator node may be one of participant nodes, or the coordinator node may be an independent node. For example, each participant node corresponds to one write transaction queue and one read transaction queue. In FIG 9, each of the three coordinator nodes 820 manages one first write transaction queue 851 and two first read transaction queues 852 (the first read transaction queues 852 are a first read transaction queue 852-1 and a first read transaction queue 852-2, where the coordinator node 820-2 correspondingly manages the first read transaction queue 852-1, and the coordinator node 820-3 correspondingly manages the first read transaction queue 852-2), the participant node 811 manages a second write transaction queue 831 and a second read transaction queue 832, and the participant node 812 manages a second write transaction queue 841 and a second read transaction queue 842.

When a terminal device sends a transaction processing request to the transaction processing device, a request corresponding to a single-partition transaction is directly sent to a participant node corresponding to the single-partition transaction, and the participant node adds the single-partition transaction to a corresponding write transaction queue or read transaction queue. For example, in FIG 8 or FIG 9, when receiving transaction processing requests sent by terminal devices, the participant node 811 adds a single-partition write transaction corresponding to a transaction processing request to the write transaction queue 831, and adds a single-partition read transaction corresponding to a transaction processing request to the read transaction queue 832; when receiving transaction processing requests sent by terminal devices, the participant node 812 adds a single-partition write transaction corresponding to a transaction processing request to the write transaction queue 841, and adds a single-partition read transaction corresponding to a transaction processing request to the read transaction queue 842.

For a multi-partition transaction, a terminal device sends a corresponding request to the coordinator node 820, and the coordinator node 820 adds the multi-partition transaction to a write transaction queue or a read transaction queue corresponding to the coordinator node 820. Specifically, after receiving transaction processing requests sent by terminal devices, the coordinator node 820 adds a multi-partition write transaction corresponding to a transaction processing request to the write transaction queue 851, and adds a multi-partition read transaction corresponding to a transaction processing request to the read transaction queue 852. When adding the multi-partition write transaction to the write transaction queue 851, the coordinator node 820 may allocate a transaction ID to the multi-partition write transaction.

A process of processing a transaction by a participant node may be as follows:

### 1. Processing for a single-partition transaction

A single-partition transaction is processed by a participant node on which a data partition related to the transaction is located. For example, using the participant node 811 in FIG 8 or FIG 9 as an example, when processing the write transaction queue 831, the participant node 811 processes write transactions in the write transaction queue 831 in series by using one thread. For example, after the participant node 811 extracts a single-partition write transaction related to the data partition 1 from the write transaction queue 831 based on a queue sequence, the participant node 811 obtains a data snapshot of the data partition 1, and after writing written data corresponding to the extracted single-partition write transaction into the obtained data snapshot, stores, as data in the data partition 1, a data snapshot obtained after the data is written.

When processing the read transaction queue 832, the participant node 811 processes single-partition read transactions in the read transaction queue 832 in series by using one thread. Specifically, for a single-partition read transaction related to the data partition 1, the participant node 811 may obtain a data snapshot of the data partition 1, read data corresponding to the single-partition read transaction from the obtained data snapshot, and after sending the read data to a terminal device, delete the obtained data snapshot.

### 2. Processing for a multi-partition write transaction

A coordinator node coordinates participant nodes to process a multi-partition write transaction. For example, as shown in FIG 8 or FIG 9, the coordinator node 820 processes multi-partition write transactions in the write transaction queue 851 in series by using one thread. Specifically, for each multi-partition write transaction, assuming that the multi-partition write transaction is to write data to the data partition 1 and the data partition 3, the coordinator node 820 separately sends the multi-partition write transaction to the participant node 811 and the participant node 812. The participant node 811 adds the multi-partition write transaction to the write transaction queue 831, and the participant node 812 adds the multi-partition write transaction to the write transaction queue 841. When processing the multi-partition write transaction, the participant node 811 obtains a data snapshot of the data partition 1, and returns an obtaining success response to the coordinator node after successfully obtaining the data snapshot, or returns an obtaining failure response to the coordinator node after failing to obtain the data snapshot. Similarly, when processing the multi-partition write transaction, the participant node 812 obtains a data snapshot of the data partition 3, and returns an obtaining success response or an obtaining failure response to the coordinator node based on whether the data snapshot is successfully obtained.

If the coordinator node 820 receives an obtaining failure response sent by one of the participant nodes, the coordinator node 820 sends a snapshot deletion request to the other participant node, to instruct the other participant node to delete a successfully obtained data snapshot.

If the coordinator node 820 determines that obtaining success responses respectively sent by the participant node 811 and the participant node 812 are received, the coordinator node 820 separately sends a transaction processing indication to the participant node 811 and the participant node 812. The participant node 811 writes data into the data snapshot corresponding to the data partition 1, and returns a writing success response or a writing failure response to the coordinator node 820 based on whether the writing is successful. In addition, the participant node 812 writes data into the data snapshot corresponding to the data partition 3, and returns a writing success response or a writing failure response to the coordinator node based on whether the writing is successful.

If the coordinator node 820 receives a writing failure response sent by one of the participant nodes, the coordinator node 820 sends a snapshot deletion request to the other participant node, to instruct the other participant node to delete a successfully written data snapshot.

If the coordinator node 820 determines that writing success responses respectively sent by the participant node 811 and the participant node 812 are received, the coordinator node 820 separately sends a committing indication to the participant node 811 and the participant node 812. The participant node 811 stores the successfully written data snapshot as data in the data partition 1, and after completing storage, updates a version number of the data in the data partition 1 with a transaction ID of the multi-partition write transaction. The participant node 812 also stores the successfully written data snapshot as data in the data partition 3, and after completing storage, updates a version number of the data in the data partition 3 with the transaction ID of the multi-partition write transaction.

### 3. Processing for a multi-partition read transaction

A coordinator node coordinates participant nodes to process a multi-partition read transaction. For example, as shown in FIG 8 or FIG 9, the coordinator node 820 processes multi-partition read transactions in the read transaction queue 852 in series by using one thread. Specifically, for a specific multi-partition read transaction, assuming that the multi-partition read transaction is to read data from the data partition 1 and the data partition 3, the coordinator node 820 separately sends a snapshot obtaining request to the participant node 811 and the participant node 812. After receiving the request, the participant node 811 obtains a data snapshot of the data partition 1, and returns version information of data in the data snapshot to the coordinator node 820. The version information of the data in the data snapshot is an ID of a multi-partition write transaction for which latest committing is completed in the data partition 1. Correspondingly, after receiving the request, the participant node 812 obtains a data snapshot of the data partition 3, and returns version information of data in the data snapshot to the coordinator node 820. After receiving the version information of the data in the data snapshot of the data partition 1 that is sent by the participant node 811, and the version information of the data in the data snapshot of the data partition 3 that is sent by the participant node 812, the coordinator node 820 detects, based on the version information, whether the data snapshot of the data partition 1 and the data snapshot of the data partition 3 meet consistency.

In this embodiment of the present invention, when version information of a data snapshot is an identifier of a multi-partition write transaction of performing latest writing into a data partition corresponding to the data snapshot, that data snapshots respectively corresponding to at least two data partitions meet consistency may mean that version information of the data snapshots respectively corresponding to the at least two data partitions is the same. Alternatively, that data snapshots respectively corresponding to at least two data partitions meet consistency may mean that for each of the at least two data partitions, version information of an obtained data snapshot of the data partition is the same as prestored version information of the data partition.

For example, the coordinator node 820 may detect, based on the version information, whether the data snapshot of the data partition 1 and the data snapshot of the data partition 3 meet consistency in the following manners:
(1) If the data partition 1 and the data partition 3 are two data partitions on which multi-partition writing is simultaneously performed (that is, when a multi-partition write transaction is related to the data partition 1, the multi-partition write transaction is definitely also related to the data partition 3), the coordinator node 820 may directly compare whether version information respectively corresponding to the two data partitions is the same. If the version information respectively corresponding to the two data partitions is the same, it indicates that data snapshots respectively corresponding to the two data partitions meet consistency. If the version information respectively corresponding to the two data partitions is different, the coordinator node 820 may further determine, based on the version information, a data partition having an earlier version (that is, a data partition corresponding to a smaller ID of a latest completed multi-partition write transaction, and the data partition has a relatively early version).
(2) If the data partition 1 and the data partition 3 are not two data partitions on which multi-partition writing is simultaneously performed (that is, when a multi-partition write transaction is related to the data partition 1, the multi-partition write transaction may be not related to the data partition 3), in this case, the coordinator node 820 may maintain version information respectively corresponding to the data partitions. In a process of processing a multi-partition write transaction, after sending a committing indication to a participant node, the coordinator node 820 updates version information, maintained by the coordinator node 820, of a data partition related to the multi-partition write transaction with an ID of the multi-partition write transaction. Correspondingly, each participant node also maintains version information of a data partition corresponding to the participant node. In a process of processing a multi-partition write transaction, after the participant node receives a committing indication sent by the coordinator node 820, and successfully stores a current data snapshot to which writing is completed as data in a corresponding data partition, the participant node updates the version information, maintained by the participant node, of the data partition to an ID of the multi-partition write transaction. During subsequent processing on a multi-partition read transaction, a participant node obtains data snapshots of data partitions related to the multi-partition read transaction, and sends version information corresponding to the data snapshots to the coordinator node 820. The coordinator node 820 then compares the version information sent by the participant node with version information that is maintained by the coordinator node 820 and that corresponds to the data partitions. If the version information, sent by the participant node, of the data snapshots corresponding to the multi-partition read transaction is the same as the version information, maintained by the coordinator node, of the corresponding data partitions, it indicates that the obtained data snapshots of the data partitions corresponding to the multi-partition read transaction meet consistency. If one or more pieces of version information in the version information, sent by the participant node, of the data snapshots corresponding to the multi-partition read transaction are different from the version information, maintained by the coordinator node, of the corresponding data partitions, it may be determined that data snapshots corresponding to the one or more pieces of version information have an earlier version.

If detecting that the data snapshot of the data partition 1 and the data snapshot of the data partition 3 do not meet consistency, the coordinator node 820 determines, based on the version information, a participant node corresponding to a data snapshot having an earlier version, and sends a data snapshot re-obtaining request to the determined participant node. After receiving the data snapshot re-obtaining request, the participant node deletes the original data snapshot, re-obtains a data snapshot, and returns version information of data in the re-obtained data snapshot to the coordinator node 820. The coordinator node 820 further detects, based on the version information of the data in the re-obtained data snapshot, whether the data snapshot of the data partition 1 and the data snapshot of the data partition 3 meet consistency.

If detecting that the data snapshot of the data partition 1 and the data snapshot of the data partition 3 meet consistency, the coordinator node 820 separately sends a transaction processing indication to the participant node 811 and the participant node 812, to instruct the participant node 811 and the participant node 812 to separately process a multi-partition read request. After receiving the transaction processing indication, the participant node 811 and the participant node 812 read data corresponding to the multi-partition read request from the obtained data snapshots, and send a reading success response or a reading failure response to the coordinator node 820 based on whether the reading is successful.

After receiving a reading failure response sent by either of the participant node 811 and the participant node 812, the coordinator node 820 sends a snapshot deletion request to the other participant node, to instruct the other participant node to delete an obtained data snapshot.

After receiving reading success responses respectively sent by the participant node 811 and the participant node 812, the coordinator node 820 separately sends a snapshot deletion request to the participant node 811 and the participant node 812, to instruct the two participant nodes to delete obtained data snapshots.

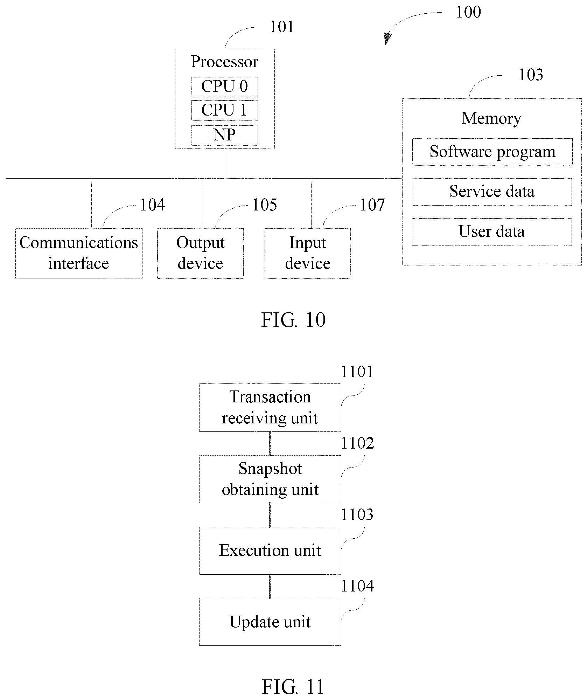

FIG 10 is a schematic structural diagram of a transaction processing device 100 according to an example embodiment of this application. The transaction processing device 100 may be implemented as the transaction processing device 210 in the network environment shown in FIG 2A. As shown in FIG 10, the transaction processing device 100 may include: a processor 101 and a communications interface 104.

The processor 101 may include one or more processing units. The processing unit may be a central processing unit (CPU), a network processor (NP), or the like.

The communications interface 104 may include a network interface. The network interface is configured to connect to a terminal device. Specifically, the network interface may include a wired network interface, such as an Ethernet interface or a fiber interface, or the network interface may include a wireless network interface, such as a wireless local area network interface or a cellular mobile network interface. The transaction processing device 100 may communicate with terminal devices through the network interface 104.

Optionally, the transaction processing device 100 may further include a memory 103. The processor 101 may be connected to the memory 103 and the communications interface 104 through a bus.

The memory 103 may be configured to store a software program. The software program may be executed by the processor 101. In addition, the memory 103 may further store various service data or user data. The software program may include a transaction receiving module, a snapshot obtaining module, an execution module, an update module, and the like.

The transaction receiving module is executed by the processor 101, to implement a function of receiving a multi-partition transaction and a single-partition transaction sent by a terminal device in the embodiment shown in FIG 3.

The snapshot obtaining module is executed by the processor 101, to implement a function of obtaining data snapshots meeting consistency in the embodiment shown in FIG 3.

The execution module is executed by the processor 101, to implement a function of performing a read operation or a write operation in the embodiment shown in FIG 3.

The update module is executed by the processor 101, to implement a function of updating version information of data in a data snapshot corresponding to a data partition in the embodiment shown in FIG 3.

Optionally, the transaction processing device 100 may further include an output device 105 and an input device 107. The output device 105 and the input device 107 are connected to the processor 101. The output device 105 may be a display configured to display information, a power amplification device for playing sound, a printer, or the like. The output device 105 may further include an output controller, to provide output to a display screen, the power amplification device, or the printer. The input device 107 may be a device used by a user to enter information, such as a mouse, a keyboard, an electronic stylus, or a touch panel. The input device 107 may further include an input controller, to receive and process input from the device such as a mouse, a keyboard, an electronic stylus, or a touch panel.

The following is an apparatus embodiment of this application, which can be used to execute the method embodiment of this application. For details that are not disclosed in the apparatus embodiment of this application, refer to the method embodiment of this application.

FIG 11 is a structural block diagram of a transaction processing apparatus according to an example embodiment of this application. The transaction processing apparatus may be implemented as a part or all of a transaction processing device by using a hardware circuit or a combination of software and hardware, and the transaction processing device may be the transaction processing device 210 in the embodiment shown in FIG 2A. The transaction processing apparatus includes: a transaction receiving unit 1101, a snapshot obtaining unit 1102, and an execution unit 1103. The transaction processing apparatus may also include an update unit 1104.

The transaction receiving unit 1101 is executed by a processor 81, to implement a function of receiving a multi-partition transaction and a single-partition transaction sent by a terminal device in the embodiment shown in FIG 3.

The snapshot obtaining unit 1102 is configured to implement a function of obtaining data snapshots meeting consistency in the embodiment shown in FIG 3.

The execution unit 1103 is configured to implement a function of performing a read operation or a write operation in the embodiment shown in FIG 3.

The update unit 1104 is configured to implement a function of updating version information of data in a data snapshot corresponding to a data partition in the embodiment shown in FIG 3.

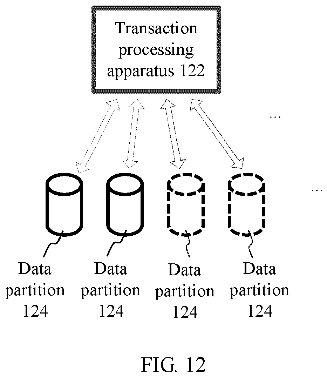

FIG 12 is a system composition diagram of a transaction processing system according to an example embodiment of this application. As shown in FIG 11, the transaction processing system may include: a transaction processing apparatus 122 and at least two data partitions 124.

The transaction processing apparatus 122 may be implemented as the transaction processing apparatus shown in FIG 11, and the transaction processing apparatus is configured to implement the transaction processing method in the embodiment shown in FIG 3.

It should be noted that when the transaction processing apparatus provided in the foregoing embodiment performs transaction processing, division of the foregoing function units is merely an example. In actual application, the foregoing functions may be allocated to different function units for implementation as necessary, that is, the inner structure of the device is divided into different function units to implement all or some of the functions described above. In addition, the transaction processing apparatus provided in the foregoing embodiment and the method embodiment of the transaction processing method are based on the same concept. Refer to the method embodiment for a specific implementation process, which is not described herein again.

The sequence numbers of the foregoing embodiments of this application are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

## Claims

1. A transaction processing method, wherein the method comprises:
receiving (S21) multiple to-be-processed transactions, and for each to-be-processed transaction:
determining whether the to-be-processed transaction is a single-partition transaction or a multi-partition transaction, wherein the single-partition transaction is a transaction of performing an operation in a single data partition and the multi-partition transaction is a transaction of performing an operation in at least two data partitions;
when the to-be-processed transaction is a multi-partition transaction, if a transaction type of the multi-partition transaction is a read transaction, adding the multi-partition transaction to a first read transaction queue, otherwise if a transaction type of the multi-partition transaction is a write transaction, adding the multi-partition transaction to a first write transaction queue;
when the to-be-processed transaction is a single-partition transaction, if a transaction type of the single-partition transaction is a read transaction, adding the single-partition transaction to a second read transaction queue of a corresponding data partition, otherwise if a transaction type of the single-partition transaction is a write transaction, adding the single-partition transaction to a second write transaction queue of a corresponding data partition;
in each write transaction queue, processing a next write transaction only after completing processing on a previous write transaction and in each read transaction queue, processing multiple read transactions in parallel;
wherein, when the to-be-processed transaction is a multi-partition transaction, the method further comprises:
obtaining (S22) data snapshots that correspond to the at least two data partitions and that meet consistency; and
performing (S23), based on the data snapshots that correspond to the at least two data partitions and that meet consistency, the operation corresponding to the to-be-processed transaction;
wherein the read transaction queues and the write transaction queues are processed in parallel.

2. The method according to claim 1, wherein the to-be-processed transaction is a transaction of performing a read operation in the at least two data partitions, and wherein the obtaining (S22) data snapshots that correspond to the at least two data partitions and that meet consistency comprises:
obtaining respective data snapshots of the at least two data partitions, and version information of the respective data snapshots of the at least two data partitions;
detecting, based on the version information of the respective data snapshots of the at least two data partitions, whether the respective data snapshots of the at least two data partitions meet consistency;
in response to a detection result being that the respective data snapshots of the at least two data partitions meet consistency, determining that the data snapshots that respectively correspond to the at least two data partitions and that meet consistency are successfully obtained.

3. The method according to claim 2, wherein the obtaining (S22) data snapshots that correspond to the at least two data partitions and that meet consistency further comprises:
if the detection result is that the respective data snapshots of the at least two data partitions do not meet consistency, re-obtaining a data snapshot of a data partition having an earlier version, and version information of the re-obtained data snapshot; and
determining, based on the version information of the re-obtained data snapshot, the respective data snapshots of the at least two data partitions meet consistency.

4. The method according to claim 2 or 3, wherein
the version information of the data snapshot comprises an identifier of a multi-partition write transaction of performing latest writing into a data partition corresponding to the data snapshot when the data snapshot is generated, and the multi-partition write transaction is a transaction of performing a write operation in the at least two data partitions.

5. The method according to claim 1, wherein the to-be-processed transaction is a transaction of performing a write operation in the at least two data partitions, and the performing, based on the data snapshots that correspond to the at least two data partitions and that meet consistency, the operation corresponding to the to-be-processed transaction comprises:
performing the write operation corresponding to the to-be-processed transaction in the data snapshots that correspond to the at least two data partitions and that meet consistency; and
storing, as data in corresponding data partitions, data snapshots obtained after the write operation corresponding to the to-be-processed transaction is performed.

6. The method according to claim 1, wherein the to-be-processed transaction is a transaction of performing a write operation in the at least two data partitions, and the method further comprises:
after the write operation corresponding to the to-be-processed transaction is successfully performed based on the data snapshots that respectively correspond to the at least two data partitions and that meet consistency, updating version information respectively corresponding to the at least two data partitions with an identifier of the to-be-processed transaction.

7. A transaction processing apparatus, wherein the apparatus comprises a transaction receiving unit (1101), a snapshot obtaining unit (1102) and an execution unit (1103), wherein:
the transaction receiving unit (1101) is configured to receive multiple to-be-processed transactions, and for each to-be-processed transaction determine whether the to-be-processed transaction is a single-partition transaction or a multi-partition transaction, wherein the single-partition transaction is a transaction of performing an operation in a single data partition and the multi-partition transaction is a transaction of performing an operation in at least two data partitions;
when the to-be-processed transaction is a multi-partition transaction, if a transaction type of the multi-partition transaction is a read transaction, add the multi-partition transaction to a first read transaction queue, otherwise if a transaction type of the multi-partition transaction is a write transaction, add the multi-partition transaction to a first write transaction queue;
when the to-be-processed transaction is a single-partition transaction, if a transaction type of the single-partition transaction is a read transaction, add the single-partition transaction to a second read transaction queue of a corresponding data partition, otherwise if a transaction type of the single-partition transaction is a write transaction, add the single-partition transaction to a second write transaction queue of a corresponding data partition;
wherein, when the to-be-processed transaction is a multi-partition transaction,
the snapshot obtaining unit (1102) is configured to obtain data snapshots that correspond to the at least two data partitions and that meet consistency; and
the execution unit (1103) is configured to perform, based on the data snapshots that correspond to the at least two data partitions and that meet consistency, the operation corresponding to the to-be-processed transaction;
wherein in each write transaction queue, processing a next write transaction only after completing processing on a previous write transaction and in each read transaction queue, processing multiple read transactions in parallel;
wherein the read transaction queues and the write transaction queues are processed in parallel.

8. The apparatus according to claim 7, wherein the to-be-processed transaction is a transaction of performing a read operation in the at least two data partitions, and wherein the snapshot obtaining unit (1102) is configured to:
obtain respective data snapshots of the at least two data partitions, and version information of the respective data snapshots of the at least two data partitions;
detect, based on the version information of the respective data snapshots of the at least two data partitions, whether the respective data snapshots of the at least two data partitions meet consistency; and
in response to a detection result being that the respective data snapshots of the at least two data partitions meet consistency, determine that the data snapshots that respectively correspond to the at least two data partitions and that meet consistency are successfully obtained.

9. The apparatus according to claim 8, wherein the snapshot obtaining unit (1102) is further configured to:
if the detection result is that the respective data snapshots of the at least two data partitions do not meet consistency, re-obtain a data snapshot of a data partition corresponding to an earlier version, and version information of the re-obtained data snapshot; and
determine, based on the version information of the re-obtained data snapshot, the respective data snapshots of the at least two data partitions meet consistency.

10. The apparatus according to claim 8 or 9, wherein
the version information of the data snapshot comprises an identifier of a multi-partition write transaction of performing latest writing into a data partition corresponding to the data snapshot when the data snapshot is generated, and the multi-partition write transaction is a transaction of performing a write operation in the at least two data partitions.

11. The apparatus according to claim 7, wherein the to-be-processed transaction is a transaction of performing a write operation in the at least two data partitions, and the execution unit (1103) is specifically configured to:
perform the write operation corresponding to the to-be-processed transaction in the data snapshots that correspond to the at least two data partitions and that meet consistency; and
store, as data in corresponding data partitions, data snapshots obtained after the write operation corresponding to the to-be-processed transaction is performed.

12. The apparatus according to claim 7, wherein the apparatus further comprises:
an update unit (1105), configured to: when the to-be-processed transaction is a transaction of performing a write operation in the at least two data partitions, after the write operation corresponding to the to-be-processed transaction is successfully performed on the data snapshots that respectively correspond to the at least two data partitions and that meet consistency, update version information respectively corresponding to the at least two data partitions with an identifier of the to-be-processed transaction.

13. A transaction processing device (100), wherein the device (100) comprises: a communications interface (104), a processor (101), and a memory (103), wherein the memory (103) stores a program or an instruction that can be executed by the processor (101), and the processor (101) controls the communications interface (104) to implement the transaction processing method according to any one of claims 1 to 6 by executing the program or the instruction stored in the memory (103).

14. A computer readable storage medium, wherein the computer readable storage medium stores an executable program, and the executable program is executed by a processor to implement the transaction processing method according to any one of claims 1 to 6.

## Patentansprüche

1. Transaktionsverarbeitungsverfahren, wobei das Verfahren Folgendes umfasst:
Empfangen (S21) mehrerer zu verarbeitender Transaktionen, und für jede zu verarbeitende Transaktion:
Bestimmen, ob die zu verarbeitende Transaktion eine Einzelpartitions-Transaktion oder eine Mehrfachpartitions-Transaktion ist, wobei die Einzelpartitions-Transaktion eine Transaktion des Ausführens einer Operation in einer einzigen Datenpartition ist und die Mehrfachpartitions-Transaktion eine Transaktion des Ausführens einer Operation in mindestens zwei Datenpartitionen ist;
wenn die zu verarbeitende Transaktion eine Mehrfachpartitions-Transaktion ist und wenn ein Transaktionstyp der Mehrfachpartitions-Transaktion eine Lesetransaktion ist, Hinzufügen der Mehrfachpartitions-Transaktion zu einer ersten Lesetransaktions-Warteschlange, andernfalls, wenn ein Transaktionstyp der Mehrfachpartitions-Transaktion eine Schreibtransaktion ist, Hinzufügen der Mehrfachpartitions-Transaktion zu einer ersten Schreibtransaktions-Warteschlange;
wenn die zu verarbeitende Transaktion eine Einzelpartitions-Transaktion ist und wenn ein Transaktionstyp der Einzelpartitions-Transaktion eine Lesetransaktion ist, Hinzufügen der Einzelpartitions-Transaktion zu einer zweiten Lesetransaktions-Warteschlange einer entsprechenden Datenpartition,
andernfalls, wenn ein Transaktionstyp der Einzelpartitions-Transaktion eine Schreibtransaktion ist, Hinzufügen der Einzelpartitions-Transaktion zu einer zweiten Schreibtransaktions-Warteschlange einer entsprechenden Datenpartition;
Verarbeiten einer nächsten Schreibtransaktion in jeder Schreibtransaktions-Warteschlange nur nach Abschluss von Verarbeitung an einer vorherigen Schreibtransaktion und paralleles Verarbeiten mehrerer Lesetransaktionen in jeder Lesetransaktions-Warteschlange;
wobei, wenn die zu verarbeitende Transaktion eine Mehrfachpartitions-Transaktion ist, das Verfahren ferner Folgendes umfasst:
Erhalten (S22) von Datenschnappschüssen, die den mindestens zwei Datenpartitionen entsprechen und die Stimmigkeit erfüllen; und
Ausführen (S23) der der zu verarbeitenden Transaktion entsprechenden Operation auf der Basis der Datenschnappschüsse, die den mindestens zwei Datenpartitionen entsprechen und die Stimmigkeit erfüllen;
wobei die Lesetransaktions-Warteschlangen und die Schreibtransaktions-Warteschlangen parallel verarbeitet werden.

2. Verfahren nach Anspruch 1, wobei die zu verarbeitende Transaktion eine Transaktion des Ausführens einer Leseoperation in den mindestens zwei Datenpartitionen ist und wobei das Erhalten (S22) von Datenschnappschüssen, die den mindestens zwei Datenpartitionen entsprechen und die Stimmigkeit erfüllen, Folgendes umfasst:
Erhalten jeweiliger Datenschnappschüsse der mindestens zwei Datenpartitionen und von Versionsinformationen der jeweiligen Datenschnappschüsse der mindestens zwei Datenpartitionen;
Detektieren, ob die jeweiligen Datenschnappschüsse der mindestens zwei Datenpartitionen Stimmigkeit erfüllen, auf der Basis der Versionsinformationen der jeweiligen Datenschnappschüsse der mindestens zwei Datenpartitionen;
wenn ein Detektionsergebnis ist, dass der jeweilige Datenschnappschuss der mindestens zwei Datenpartitionen Stimmigkeit erfüllt, Bestimmen, dass die Datenschnappschüsse, die jeweils den mindestens zwei Datenpartitionen entsprechen und die Stimmigkeit erfüllen, erfolgreich erhalten sind.

3. Verfahren nach Anspruch 2, wobei das Erhalten (S22) von Datenschnappschüssen, die den mindestens zwei Datenpartitionen entsprechen und die Stimmigkeit erfüllen, ferner Folgendes umfasst:
wenn das Detektionsergebnis ist, dass die jeweiligen Datenschnappschüsse der mindestens zwei Datenpartitionen nicht Stimmigkeit erfüllen, Neuerhalten eines Datenschnappschusses einer Datenpartition mit einer früheren Version und von Versionsinformationen des neu erhaltenen Datenschnappschusses; und
Bestimmen auf der Basis der Versionsinformationen des neu erhaltenen Datenschnappschusses, dass die jeweiligen Datenschnappschüsse der mindestens zwei Datenpartitionen Stimmigkeit erfüllen.

4. Verfahren nach Anspruch 2 oder 3, wobei
die Versionsinformationen des Datenschnappschusses eine Kennung einer Mehrfachpartitions-Schreibtransaktion des Ausführens spätesten Schreibens in eine Datenpartition, die dem Datenschnappschuss entspricht, wenn der Datenschnappschuss erzeugt wird, umfassen und die Mehrfachpartitions-Schreibtransaktion eine Transaktion des Ausführens einer Schreiboperation in den mindestens zwei Datenpartitionen ist.

5. Verfahren nach Anspruch 1, wobei die zu verarbeitende Transaktion eine Transaktion des Ausführens einer Schreiboperation in den mindestens zwei Datenpartitionen ist und das Ausführen der der zu verarbeitenden Transaktion entsprechenden Operation auf der Basis der Datenschnappschüsse, die den mindestens zwei Datenpartitionen entsprechen und die Stimmigkeit erfüllen, Folgendes umfasst:
Ausführen der Schreiboperation, die der zu verarbeitenden Transaktion entspricht, in den Datenschnappschüssen, die den mindestens zwei Datenpartitionen entsprechen und die Stimmigkeit erfüllen; und
Speichern von Datenschnappschüssen, die erhalten werden, nachdem die der zu verarbeitenden Transaktion entsprechende Schreiboperation ausgeführt ist, als Daten in entsprechenden Datenpartitionen.

6. Verfahren nach Anspruch 1, wobei die zu verarbeitende Transaktion eine Transaktion des Ausführens einer Schreiboperation in den mindestens zwei Datenpartitionen ist und das Verfahren ferner Folgendes umfasst:
nachdem die der zu verarbeitenden Transaktion entsprechende Schreiboperation erfolgreich auf der Basis der Datenschnappschüsse ausgeführt ist, die jeweils den mindestens zwei Datenpartitionen entsprechen und die Stimmigkeit erfüllen, Aktualisieren von Versionsinformationen, die jeweils den mindestens zwei Datenpartitionen entsprechen, mit einer Kennung der zu verarbeitenden Transaktion.

7. Transaktionsverarbeitungsvorrichtung, wobei die Vorrichtung eine Transaktionsempfangseinheit (1101), eine Schnappschuss-Erhalteeinheit (1102) und eine Ausführungseinheit (1103) umfasst, wobei
die Transaktionsempfangseinheit (1101) ausgelegt ist zum Empfangen mehrerer zu verarbeitender Transaktionen und Bestimmen, ob die zu verarbeitende Transaktion eine Einzelpartitions-Transaktion oder eine Mehrfachpartitions-Transaktion ist, für jede zu verarbeitende Transaktion, wobei die Einzelpartitions-Transaktion eine Transaktion des Ausführens einer Operation in einer einzigen Datenpartition ist und die Mehrfachpartitions-Transaktion eine Transaktion des Ausführens einer Operation in mindestens zwei Datenpartitionen ist;
wenn die zu verarbeitende Transaktion eine Mehrfachpartitions-Transaktion ist und wenn ein Transaktionstyp der Mehrfachpartitions-Transaktion eine Lesetransaktion ist, Hinzufügen der Mehrfachpartitions-Transaktion zu einer ersten Lesetransaktions-Warteschlange, andernfalls, wenn ein Transaktionstyp der Mehrfachpartitions-Transaktion eine Schreibtransaktion ist, Hinzufügen der Mehrfachpartitions-Transaktion zu einer ersten Schreibtransaktions-Warteschlange;
wenn die zu verarbeitende Transaktion eine Einzelpartitions-Transaktion ist und wenn ein Transaktionstyp der Einzelpartitions-Transaktion eine Lesetransaktion ist, Hinzufügen der Einzelpartitions-Transaktion zu einer zweiten Lesetransaktions-Warteschlange einer entsprechenden Datenpartition,
andernfalls, wenn ein Transaktionstyp der Einzelpartitions-Transaktion eine Schreibtransaktion ist, Hinzufügen der Einzelpartitions-Transaktion zu einer zweiten Schreibtransaktions-Warteschlange einer entsprechenden Datenpartition;
wobei, wenn die zu verarbeitende Transaktion eine Mehrfachpartitions-Transaktion ist,
die Schnappschuss-Erhalteeinheit (1102) ausgelegt ist zum Erhalten von Datenschnappschüssen, die den mindestens zwei Datenpartitionen entsprechen und die Stimmigkeit erfüllen; und
die Ausführungseinheit (1103) ausgelegt ist zum Ausführen der der zu verarbeitenden Transaktion entsprechenden Operation auf der Basis der Datenschnappschüsse, die den mindestens zwei Datenpartitionen entsprechen und die Stimmigkeit erfüllen;
wobei eine nächste Schreibtransaktion in jeder Schreibtransaktions-Warteschlange nur nach Abschluss von Verarbeitung an einer vorherigen Schreibtransaktion verarbeitet wird und mehrerer Lesetransaktionen in jeder Lesetransaktions-Warteschlange parallel verarbeitet werden;
wobei die Lesetransaktions-Warteschlangen und die Schreibtransaktions-Warteschlangen parallel verarbeitet werden.

8. Vorrichtung nach Anspruch 7, wobei die zu verarbeitende Transaktion eine Transaktion des Ausführens einer Leseoperation in den mindestens zwei Datenpartitionen ist und wobei die Schnappschuss-Erhalteeinheit (1102) ausgelegt ist zum
Erhalten jeweiliger Datenschnappschüsse der mindestens zwei Datenpartitionen und von Versionsinformationen der jeweiligen Datenschnappschüsse der mindestens zwei Datenpartitionen;
Detektieren, ob die jeweiligen Datenschnappschüsse der mindestens zwei Datenpartitionen Stimmigkeit erfüllen, auf der Basis der Versionsinformationen der jeweiligen Datenschnappschüsse der mindestens zwei Datenpartitionen; und
wenn ein Detektionsergebnis ist, dass die jeweiligen Datenschnappschüsse der mindestens zwei Datenpartitionen Stimmigkeit erfüllen, Bestimmen, dass die Datenschnappschüsse, die jeweils den mindestens zwei Datenpartitionen entsprechen und die Stimmigkeit erfüllen, erfolgreich erhalten sind.

9. Vorrichtung nach Anspruch 8, wobei die Schnappschuss-Erhalteeinheit (1102) ferner für Folgendes ausgelegt ist:
wenn das Detektionsergebnis ist, dass die jeweiligen Datenschnappschüsse der mindestens zwei Datenpartitionen nicht Stimmigkeit erfüllen, Neuerhalten eines Datenschnappschusses einer Datenpartition, der einer früheren Version entspricht, und von Versionsinformationen des neu erhaltenen Datenschnappschusses; und
Bestimmen auf der Basis der Versionsinformationen des neu erhaltenen Datenschnappschusses, dass die jeweiligen Datenschnappschüsse der mindestens zwei Datenpartitionen Stimmigkeit erfüllen.

10. Vorrichtung nach Anspruch 8 oder 9, wobei
die Versionsinformationen des Datenschnappschusses eine Kennung einer Mehrfachpartitions-Schreibtransaktion des Ausführens spätesten Schreibens in eine Datenpartition, die dem Datenschnappschuss entspricht, wenn der Datenschnappschuss erzeugt wird, umfassen und die Mehrfachpartitions-Schreibtransaktion eine Transaktion des Ausführens einer Schreiboperation in den mindestens zwei Datenpartitionen ist.

11. Vorrichtung nach Anspruch 7, wobei die zu verarbeitende Transaktion eine Transaktion des Ausführens einer Schreiboperation in den mindestens zwei Datenpartitionen ist und die Ausführungseinheit (1103) speziell ausgelegt ist zum Ausführen der Schreiboperation, die der zu verarbeitenden Transaktion entspricht, in den Datenschnappschüssen, die den mindestens zwei Datenpartitionen entsprechen und die Stimmigkeit erfüllen; und
Speichern von Datenschnappschüssen, die erhalten werden, nachdem die der zu verarbeitenden Transaktion entsprechende Schreiboperation ausgeführt ist, als Daten in entsprechenden Datenpartitionen.

12. Vorrichtung nach Anspruch 7, wobei die Vorrichtung ferner Folgendes umfasst: eine Aktualisierungseinheit (1105), die für Folgendes ausgelegt ist: wenn die zu verarbeitende Transaktion eine Transaktion des Ausführens einer Schreiboperation in den mindestens zwei Datenpartitionen ist, nachdem die der zu verarbeitenden Transaktion entsprechende Schreiboperation erfolgreich an den Datenschnappschüssen ausgeführt ist, die jeweils den mindestens zwei Datenpartitionen entsprechen und die Stimmigkeit erfüllen, Aktualisieren von Versionsinformationen, die jeweils den mindestens zwei Datenpartitionen entsprechen, mit einer Kennung der zu verarbeitenden Transaktion.

13. Transaktionsverarbeitungseinrichtung (100), wobei die Einrichtung (100) Folgendes umfasst: eine Kommunikationsschnittstelle (104), einen Prozessor (101) und einen Speicher (103), wobei der Speicher (103) ein Programm oder eine Anweisung speichert, die durch den Prozessor (101) ausgeführt werden können, und der Prozessor (101) die Kommunikationsschnittstelle (104) steuert, um das Transaktionsverarbeitungsverfahren nach einem der Ansprüche 1 bis 6 durch Ausführen des Programms oder der Anweisung, die in dem Speicher (103) gespeichert sind, zu implementieren.

14. Computerlesbares Speicherungsmedium, wobei das computerlesbare Speicherungsmedium ein ausführbares Programm speichert und das ausführbare Programm durch einen Prozessor ausgeführt wird, um das Transaktionsverarbeitungsverfahren nach einem der Ansprüche 1 bis 6 zu implementieren.

## Revendications

1. Procédé de traitement de transaction, dans lequel le procédé comprend :
la réception (S21) de plusieurs transactions à traiter, et pour chaque transaction à traiter :
la détermination du fait que la transaction à traiter est une transaction à une seule partition ou une transaction à plusieurs partitions, la transaction à une seule partition étant une transaction d'exécution d'une opération dans une seule partition de données et la transaction à plusieurs partitions étant une transaction d'exécution d'une opération dans au moins deux partitions de données ;
lorsque la transaction à traiter est une transaction à plusieurs partitions, si un type de transaction de la transaction à plusieurs partitions est une transaction de lecture, l'ajout de la transaction à plusieurs partitions à une première file d'attente de transaction de lecture, autrement, si un type de transaction de la transaction à plusieurs partitions est une transaction d'écriture, l'ajout de la transaction à plusieurs partitions à une première file d'attente de transaction d'écriture ;
lorsque la transaction à traiter est une transaction à une seule partition, si un type de transaction de la transaction à une seule partition est une transaction de lecture, l'ajout de la transaction à une seule partition à une deuxième file d'attente de transaction de lecture d'une partition de données correspondante,
autrement, si un type de transaction de la transaction à une seule partition est une transaction d'écriture, l'ajout de la transaction à une seule partition à une deuxième file d'attente de transaction d'écriture d'une partition de données correspondante ;
dans chaque file d'attente de transaction d'écriture, le traitement d'une transaction d'écriture suivante uniquement après achèvement du traitement d'une transaction d'écriture précédente et, dans chaque file d'attente de lecture, le traitement de plusieurs transactions de lecture en parallèle ;
le procédé comprenant en outre, lorsque la transaction à traiter est une transaction à plusieurs partitions :
l'obtention (S22) d'instantanés de données qui correspondent aux au moins deux partitions de données et qui sont cohérents ; et
l'exécution (S23), sur la base des instantanés de données qui correspondent aux au moins deux partitions de données et qui sont cohérents, de l'opération correspondant à la transaction à traiter ;
les files d'attente de transaction de lecture et les files d'attente de transaction d'écriture étant traitées en parallèle.

2. Procédé selon la revendication 1, dans lequel la transaction à traiter est une transaction d'exécution d'une opération de lecture dans les au moins deux partitions de données, et dans lequel l'obtention (S22) d'instantanés de données qui correspondent aux au moins deux partitions de données et qui sont cohérents comprend :
l'obtention d'instantanés de données respectifs des au moins deux partitions de données, et d'informations de version des instantanés de données respectifs des au moins deux partitions de données ;
la détection, en fonction des informations de version des instantanés de données respectifs des au moins deux partitions de données, du fait que les instantanés de données respectifs des au moins deux partitions de données sont ou non cohérents ;
en réponse à un résultat de détection établissant que les instantanés de données respectifs des au moins deux partitions de données sont cohérents, la détermination du fait que les instantanés de données qui correspondent respectivement aux au moins deux partitions de données et qui sont cohérents sont obtenus avec succès.

3. Procédé selon la revendication 2, dans lequel l'obtention (S22) d'instantanés de données qui correspondent aux au moins deux partitions de données et qui sont cohérents comprend en outre :
si le résultat de détection établit que les instantanés de données respectifs des au moins deux partitions de données ne sont pas cohérents, la ré-obtention d'un instantané de données d'une partition de données ayant une version précédente, et d'informations de version de l'instantané de données ré-obtenu ; et
la détermination, en fonction des informations de version de l'instantané de données ré-obtenu, du fait que les instantanés de données respectifs des au moins deux partitions de données sont cohérents.

4. Procédé selon la revendication 2 ou 3, dans lequel
les informations de version de l'instantané de données comprennent un identifiant d'une transaction d'écriture à plusieurs partitions d'exécution de la dernière écriture dans une partition de données correspondant à l'instantané de données lorsque l'instantané de données est généré, et la transaction d'écriture à plusieurs partitions est une transaction d'exécution d'une opération d'écriture dans les au moins deux partitions de données.

5. Procédé selon la revendication 1, dans lequel la transaction à traiter est une transaction d'exécution d'une opération d'écriture dans les au moins deux partitions de données, et l'exécution, sur la base des instantanés de données qui correspondent aux au moins deux partitions de données et qui sont cohérents, de l'opération correspondant à la transaction à traiter comprend :
l'exécution de l'opération d'écriture correspondant à la transaction à traiter dans les instantanés de données qui correspondent aux au moins deux partitions de données et qui sont cohérents ; et
le stockage, en tant que données dans les partitions de données correspondantes, des instantanés de données obtenus après exécution de l'opération d'écriture correspondant à la transaction à traiter.

6. Procédé selon la revendication 1, dans lequel la transaction à traiter est une transaction d'exécution d'une opération d'écriture dans les au moins deux partitions de données, et le procédé comprend en outre :
après que l'opération d'écriture correspondant à la transaction à traiter a été exécutée avec succès, sur la base des instantanés de données qui correspondent respectivement aux au moins deux partitions de données et qui sont cohérents, la mise à jour des informations de version correspondant respectivement aux au moins deux partitions de données avec un identifiant de la transaction à traiter.

7. Appareil de traitement de transaction, dans lequel l'appareil comprend une unité de réception de transaction (1101), une unité d'obtention d'instantané (1102) et une unité d'exécution (1103), dans lequel :
l'unité de réception de transaction (1101) est configurée pour recevoir plusieurs transactions à traiter, et pour chacune des transactions à traiter déterminer si la transaction à traiter est une transaction à une seule partition ou une transaction à plusieurs partitions, la transaction à une seule partition étant une transaction d'exécution d'une opération dans une seule partition de données et la transaction à plusieurs partitions étant une transaction d'exécution d'une opération dans au moins deux partitions de données ;
lorsque la transaction à traiter est une transaction à plusieurs partitions, si un type de transaction de la transaction à plusieurs partitions est une transaction de lecture, ajouter la transaction à plusieurs partitions à une première file d'attente de transaction de lecture, autrement, si un type de transaction de la transaction à plusieurs partitions est une transaction d'écriture, ajouter la transaction à plusieurs partitions à une première file d'attente de transaction d'écriture ;
lorsque la transaction à traiter est une transaction à une seule partition, si un type de transaction de la transaction à une seule partition est une transaction de lecture, ajouter la transaction à une seule partition à une deuxième file d'attente de transaction de lecture d'une partition de données correspondante,
autrement, si un type de transaction de la transaction à une seule partition est une transaction d'écriture, ajouter la transaction à une seule partition à une deuxième file d'attente de transaction d'écriture d'une partition de données correspondante ;
dans lequel, lorsque la transaction à traiter est une transaction à plusieurs partitions,
l'unité d'obtention d'instantané (1102) est configurée pour obtenir des instantanés de données qui correspondent aux au moins deux partitions de données et qui sont cohérents ; et
l'unité d'exécution (1103) est configurée pour exécuter, sur la base des instantanés de données qui correspondent aux au moins deux partitions de données et qui sont cohérents, l'opération correspondant à la transaction à traiter ;
dans lequel, dans chaque file d'attente de transaction d'écriture, le traitement d'une transaction d'écriture suivante se fait uniquement après achèvement du traitement d'une transaction d'écriture précédente et, dans chaque file d'attente de lecture, le traitement de plusieurs transactions de lecture se fait en parallèle ;
les files d'attente de transaction de lecture et les files d'attente de transaction d'écriture étant traitées en parallèle.

8. Appareil selon la revendication 7, dans lequel la transaction à traiter est une transaction d'exécution d'une opération de lecture dans les au moins deux partitions de données, et dans lequel l'unité d'obtention d'instantané (1102) est configurée pour :
obtenir des instantanés de données respectifs des au moins deux partitions de données, et des informations de version des instantanés de données respectifs des au moins deux partitions de données ;
détecter, en fonction des informations de version des instantanés de données respectifs des au moins deux partitions de données, si les instantanés de données respectifs des au moins deux partitions de données sont ou non cohérents ; et
en réponse à un résultat de détection établissant que les instantanés de données respectifs des au moins deux partitions de données sont cohérents, déterminer que les instantanés de données qui correspondent respectivement aux au moins deux partitions de données et qui sont cohérents sont obtenus avec succès.

9. Appareil selon la revendication 8, dans lequel l'unité d'obtention d'instantané (1102) est en outre configurée pour :
si le résultat de détection établit que les instantanés de données respectifs des au moins deux partitions de données ne sont pas cohérents, ré-obtenir un instantané de données d'une partition de données correspondant à une version précédente, et des informations de version de l'instantané de données ré-obtenu ; et
déterminer, en fonction des informations de version de l'instantané de données ré-obtenu, que les instantanés de données respectifs des au moins deux partitions de données sont cohérents.

10. Appareil selon la revendication 8 ou 9, dans lequel
les informations de version de l'instantané de données comprennent un identifiant d'une transaction d'écriture à plusieurs partitions d'exécution de la dernière écriture dans une partition de données correspondant à l'instantané de données lorsque l'instantané de données est généré, et la transaction d'écriture à plusieurs partitions est une transaction d'exécution d'une opération d'écriture dans les au moins deux partitions de données.

11. Appareil selon la revendication 7, dans lequel la transaction à traiter est une transaction d'exécution d'une opération d'écriture dans les au moins deux partitions de données, et dans lequel l'unité d'exécution (1103) est configurée spécifiquement pour :
exécuter l'opération d'écriture correspondant à la transaction à traiter dans les instantanés de données qui correspondent aux au moins deux partitions de données et qui sont cohérents ; et
stocker, en tant que données dans les partitions de données correspondantes, les instantanés de données obtenus après exécution de l'opération d'écriture correspondant à la transaction à traiter.

12. Appareil selon la revendication 7, dans lequel l'appareil comprend en outre :
une unité de mise à jour (1105), configurée pour : lorsque la transaction à traiter est une transaction d'exécution d'une opération d'écriture dans les au moins deux partitions de données, après que l'opération d'écriture correspondant à la transaction à traiter a été exécutée avec succès sur les instantanés de données qui correspondent respectivement aux au moins deux partitions de données et qui sont cohérents, mettre à jour les informations de version correspondant respectivement aux au moins deux partitions de données avec un identifiant de la transaction à traiter.

13. Dispositif de traitement de transaction (100), dans lequel le dispositif (100) comprend : une interface de communication (104), un processeur (101), et une mémoire (103), la mémoire (103) stockant un programme ou une instruction pouvant être exécuté(e) par le processeur (101), et le processeur (101) commandant l'interface de communication (104) pour la mise en oeuvre du procédé de traitement de transaction selon l'une quelconque des revendications 1 à 6 par exécution du programme ou de l'instruction stocké(e) dans la mémoire (103).

14. Support de stockage lisible par ordinateur, dans lequel le support de stockage lisible par ordinateur stocke un programme exécutable, et le programme exécutable est exécuté par un processeur pour la mise en oeuvre du procédé de traitement de transaction selon l'une quelconque des revendications 1 à 6.
